# DEMANDE DE BREVET EUROPEEN

(11) **EP 4 647 469 A1**
(43) Date de publication de la demande: **12.11.2025**
(21) Numéro de dépôt: 25172047.0
(22) Date de dépôt: 23.04.2025
(51) Int. Cl.: C09D 5/08, C09D 163/00, C23C 22/06, C23C 22/73, C09D 7/61, C23C 22/83, C08K 3/24, C08K 3/32

(54) **PROCEDE DE TRAITEMENT ANTICORROSION D'UNE PIECE EN ALLIAGE DE MAGNESIUM, SUBSTANCE ANTICORROSION CORRESPONDANTE ET PIECE TRAITEE**

(30) Priorité: 24.04.2024 FR 2404217
(71) Demandeur: Airbus Helicopters, 13725 Marignane Cedex (FR)
(72) Inventeur: HEYRAUD, Séverine, 13300 SALON DE PROVENCE (FR); BIANCO, Sylvain, 86660 TAPFHEIM (DE)
(74) Mandataire: GPI Brevets

(57) **Abrégé**

La présente invention concerne un procédé de traitement anticorrosion d'une pièce en alliage de magnésium, le procédé comportant une mise en contact au moins localement, avec un organe applicateur, d'une portion de la pièce avec une substance anticorrosion pendant une durée prédéterminée.

Une substance anticorrosion contient des ions permanganate MnO₄⁻, des ions dihydrogénophosphate H₂PO₄⁻ et un gel époxy.

Après la durée prédéterminée, le procédé comporte un rinçage avec de l'eau de la portion de la pièce.

## Description

La présente invention concerne un procédé de traitement anticorrosion d'une pièce en alliage de magnésium, une substance anticorrosion permettant la mise en œuvre du procédé ainsi qu'une pièce obtenue après traitement selon le procédé de l'invention.

Les alliages de magnésium sont des mélanges de magnésium et d'autres métaux d'alliage, généralement au moins un métal choisi parmi l'aluminium, le zinc, le silicium, le manganèse, le cuivre, le zirconium, le néodyme, le gadolinium. Certains alliages peuvent également comprendre des terres rares.

En outre, l'une des caractéristiques remarquables du magnésium est sa densité, 1,7 g/cm3 (grammes par centimètre cube) ; les alliages à base de magnésium sont donc utilisés lorsque le gain de masse est une considération importante, par exemple dans les composants et équipements d'avions ou de giravions. Les alliages de magnésium ont une structure de réseau cristallin hexagonale, laquelle est plus rigide qu'une structure cubique. Par ailleurs, les alliages de magnésium sont généralement utilisés comme alliages coulés.

Cependant, ces alliages de magnésium peuvent s'oxyder en présence d'eau ou de vapeur d'eau, ce qui peut altérer leurs caractéristiques mécaniques et dégrader la résistance en statique ou en fatigue des pièces ainsi formées.

Le document EP1277853 A1 décrit un procédé de traitement anticorrosion d'une plaque moulée d'un alliage de magnésium AZ91D (contenant 90% de magnésium, 9% d'aluminium et 1% de zinc). La plaque est immergée dans une solution d'agent de dégraissage à 40°C (degrés Celsius) pendant 10 minutes (10 min), puis lavée à l'eau déionisée pendant une minute. La plaque est ensuite immergée dans une solution de décapage d'hydroxyde de potassium pendant 15 min à 60°C, puis lavée à l'eau déionisée. Elle est enfin plongée dans un litre (1L) d'un bain anticorrosion, constitué d'une solution aqueuse de phosphate de manganèse contenant 100 grammes (100 g) de dihydrogénophosphate d'ammonium et 20 g de permanganate de potassium dont le pH est ajusté à 3,5 avec de l'acide orthophosphorique. Le bain a lieu à 40°C pendant 15 min. La plaque est ensuite rincée à l'eau déionisée et séchée.

Le procédé décrit dans le document précité est certes conforme à certaines réglementations, telle la réglementation REACH, visant à améliorer la protection de la santé humaine et de l'environnement contre les risques liés aux substances chimiques, car les solutions utilisées ne contiennent notamment pas de chrome hexavalent. Ce procédé est adapté au traitement de pièces en bain. Néanmoins lorsque des traitements effectués localement sur pièces peintes ou équipées sont nécessaires, l'immersion de la pièces ou l'utilisation d'une solution liquide comporte des risques de détérioration de ces peintures ou équipements. Il y a donc pour ces cas un besoin de procédé de retouche et réparation locales adaptées sans risque de coulures ou infiltrations sur les pièces pouvant être ou non préalablement traitées.

De plus, le document précité ne donne pas d'informations sur l'épaisseur de la couche anticorrosion formée. L'épaisseur de la couche formée revêt une grande importance lorsqu'il s'agit de traiter des pièces présentant des cotes précises qui doivent être respectés pour que la pièce puisse être utilisée dans un mécanisme, par exemple dans un moteur. Les caractéristiques de cette couche revêtent également une grande importance quand il s'agit d'une pièce soumise à des efforts variables. L'influence de la couche de traitement sur la tenue en fatigue de l'alliage traitée est alors également importante.

Le document JP 2003 277944 A divulgue quant à lui une composition de conversion chimique anti-corrosive comprenant une solution de permanganate de potassium (30g/L soit 0.19 mol/L) et de dihydrogénophosphate de sodium (100g/L soit0.83 mol/L). La concentration de phosphate est préférentiellement entre 50000ppm (50g/L) et 100000 (100g/L).

Le document EP 0 952 193 B1 divulgue quant à lui une méthode pour traiter une surface métallique, telle qu'un alliage de magnésium. Ce procédé comporte notamment une application d'une composition anti-corrosive comprenant dihydrogénophosphate de calcium, du phosphate de manganèse et une résine acryl-epoxy.

Un but de la présente invention est donc de proposer un procédé de traitement anticorrosion qui soit facilement industrialisable, applicable localement sur une portion de la pièce, et qui permette de garantir la tenue en fatigue, la performance anticorrosion et la compatibilité avec les systèmes de peinture des pièces ainsi traitées.

Un autre but de la présente invention est de proposer un procédé qui permet d'obtenir un revêtement apte à fournir une protection anticorrosion de moins de 5 micromètres (5µm) d'épaisseur, dont les cotes doivent être respectées pour que la pièce puisse assurer sa fonction dans un mécanisme ou forme un carter apte à loger et guider un mécanisme, par exemple en rotation ou translation.

Un autre but de l'invention est de fournir une substance anticorrosion qui ne contient pas de chrome.

Un autre but de la présente invention est de fournir une pièce en alliage de magnésium traitée anticorrosion qui présente une couche de traitement anticorrosion dont l'épaisseur est de moins de 5 µm.

Un autre but de la présente invention est de proposer une pièce en alliage de magnésium traitée anticorrosion dont la couche de traitement anticorrosion présente une adhérence optimale au regard des peintures, notamment selon la norme ISO 2409.

L'invention concerne donc un procédé de traitement anticorrosion d'une pièce en alliage de magnésium, le procédé comportant une mise en contact au moins localement, avec un organe applicateur, d'une portion de la pièce avec une substance anticorrosion pendant une durée prédéterminée.

Selon l'invention, un tel procédé est remarquable en ce que la substance anticorrosion contient :
- des ions permanganate MnO₄⁻,
- des ions dihydrogénophosphate H₂PO₄⁻, et
- un gel époxy dont le pH est compris entre 6 et 8,

après mélange, ladite substance anticorrosion comportant une concentration molaire en ions permanganate [MnO₄⁻] supérieure ou égale à 0,06 mol/L (mole par litre) et inférieure ou égale à 0,31 mol/L, et une concentration molaire en ions dihydrogénophosphate [H₂PO₄⁻] supérieure ou égale à 0,47 mol/L (mole par litre) et inférieure ou égale à 0,63 mol/L, et préférentiellement comprise entre 0,51 mol/L et 0,59 mol/L,
et en ce que, après la durée prédéterminée, le procédé comporte un rinçage avec de l'eau de la portion de la pièce.

En outre, l'organe applicateur permet d'appliquer la substance anticorrosion par un dépôt localisé sur la portion de la pièce. La substance anticorrosion peut alors imprégner la zone à traiter de la pièce pour que les ions permanganate puisse réagirent avec le magnésium de l'alliage formant la pièce.

Un tel organe applicateur peut être, par exemple, choisi parmi un pinceau, un rouleau, un tampon, une étoffe ou une éponge.

Le gel époxy permet quant à lui de rendre la substance anticorrosion visqueuse, la rendre adhérente à la pièce à la température ambiante et ainsi constituer un media stable porteur pour les ingrédients chimiques dissous dans la substance anticorrosion en limitant les risques de coulures et infiltrations. Une telle substance anticorrosion est donc moins fluide qu'une solution aqueuse et le gel époxy est un média compatible avec les composants chimiques dissous que sont les ions permanganate MnO4⁻ et les ions dihydrogénophosphate H₂PO₄⁻.

En outre, un tel gel époxy peut comporter au moins une résine époxy et un durcisseur.

Par ailleurs, la résine époxy contenue dans le gel époxy peut être avantageusement choisie parmi le groupe comportant les résines à base de Bisphénol A (BPA), les résines à base de Bisphénol F (BPF), les Novolaques, les Aliphatiques, les Glycidylamines et les résines biosourcées.

A titre d'exemple non limitatif, le gel époxy utilisé dans la substance anticorrosion peut être un gel commercialisé sous la marque BONDERITE^{®} avec la référence M-AD BASE EP par la société Henkel AG & Co. KGaA.

Par ailleurs, le pH de la substance anticorrosion peut présenter, avant contact avec la pièce, une valeur égale ou supérieure à 3,2 et égale ou inférieure à 4,2 et de préférence égale ou supérieure à 3,4 et égale ou inférieure à 4,0.

En pratique, la substance anticorrosion peut être obtenue en mélangeant le gel époxy avec une poudre présentant du permanganate de potassium KMnO₄ et du dihydrogénophosphate de potassium KH₂PO₄ à l'état solide.

Les concentrations molaires précitées ainsi que la valeur du pH permettent d'obtenir une couche particulièrement fine et présentant une résistance à la corrosion optimale, notamment saline selon la norme ISO 9227. La couche formée a également un état de surface et une rugosité adaptés permettant de garantir une accroche optimale aux systèmes de peinture et aux vernis qui est la principale fonction recherchée.

Au contact de la substance anticorrosion de l'invention, le magnésium de l'alliage est attaqué par les ions permanganate selon la réaction chimique réversible suivante (1) :

2MnO₄⁻ + 3Mg + 8H⁺ ⇆ 2MnO₂(s) + 3Mg²⁺ + 4H₂O (1)

Une couche poreuse d'oxyde de manganèse MnO₂ solide se forme à la surface de la pièce ou de la portion traitée. Du fait de la combinaison de la valeur du pH et des concentrations particulières en ions permanganate [MnO₄⁻] et dihydrogénophosphate [H₂PO₄⁻] contenues dans la substance anticorrosion, les ions précipitent alors en phosphate de magnésium Mg(PO₄)₂ et permanganate de magnésium Mg(MnO₄)₂ et bouchent les pores de la couche d'oxyde de manganèse. Par ailleurs, celle-ci reste d'une épaisseur inférieure à 5µm grâce aux valeurs des concentrations ioniques précitées et du pH auquel se trouve initialement la substance anticorrosion.

Dans la gamme de pH indiquée, les ions phosphates sont majoritaires. Ils peuvent également venir colmater la couche poreuse d'oxyde de manganèse ou se transformer dans cette dernière en acide phosphorique, lequel précipitera in situ une fois que la pièce ne sera plus en contact avec la substance anticorrosion, colmatant ainsi les pores de la couche anticorrosion.

Avantageusement, la concentration molaire en ions permanganate [MnO₄⁻] peut être supérieure ou égale à 0,08 mol/L et inférieure ou égale à 0,18 mol/L et notamment égale à 0,13 mol/L.

Selon un exemple de réalisation avantageux de l'invention, la durée prédéterminée peut être supérieure ou égale à 1 min (minute) et inférieure ou égale à 10 min et de préférence égale ou supérieure à 3 min et inférieure ou égale à 7 min.

La durée prédéterminée peut ainsi être égale ou supérieure à 4 min et inférieure ou égale à 6 min. De telles valeurs permettent d'obtenir une couche poreuse d'oxyde de manganèse de moins de 5µm d'épaisseur, disposant d'une structure microscopique présentant une bonne adhérence pour les vernis et les systèmes de peinture anticorrosion ainsi qu'une bonne tenue anticorrosion au brouillard salin neutre selon la norme ISO 9227. Une affinité chimique existe également entre la nature de la couche poreuse d'oxyde de manganèse et la nature des peintures.

La durée prédéterminée ainsi réduite pour la mise en œuvre du procédé permet d'améliorer son industrialisation.

En pratique, lors de la mise en contact au moins localement de la portion de la pièce avec la substance anticorrosion, la substance anticorrosion peut présenter une température égale à une température de l'air ambiant.

En outre, la limite de solubilité des ions permanganate peut être avantageusement augmentée en augmentant la valeur de la température de la substance anticorrosion. Cette température permet d'optimiser la concentration de la substance en ions permanganate afin d'atteindre les niveaux de concentrations nécessaires à l'obtention d'un revêtement anticorrosion performant et qui garantisse une adhérence optimale aux systèmes de peinture.

L'utilisation d'une substance anticorrosion à la température ambiante permet quant à elle de simplifier l'industrialisation d'un tel procédé de traitement.

Avantageusement, la substance anticorrosion peut présenter une viscosité dynamique comprise entre 1 pascal-seconde (Pa.s) et 1000 Pa.s.

Une telle plage de valeurs de la viscosité de la substance anticorrosion permet ainsi de rester au contact de la pièce ou de la portion traitée quelle que soit sa forme, sa taille ou son orientation.

Une telle viscosité dynamique de la substance anticorrosion permet une application sur une surface orientée verticalement d'une pièce sans s'écouler sur cette surface et ce à la température ambiante.

En pratique, préalablement à la mise en contact de la substance anticorrosion avec la pièce, on peut agiter la substance anticorrosion. Une telle agitation peut avantageusement être réalisée manuellement au moyen d'un dispositif dédié tel un agitateur.

Avantageusement, quel que soit le mode de mise en œuvre de l'invention, la substance anticorrosion peut contenir également des ions choisis parmi les ions potassium, ammonium, sodium, calcium et leurs mélanges. Ces ions proviennent de l'utilisation d'un ou de plusieurs sels de dihydrogénophosphate. Avantageusement, quel que soit le mode de mise en œuvre du procédé de l'invention, la substance anticorrosion de l'invention est, avant contact avec la pièce, constituée d'eau en présence dans le gel époxy, d'ions hydronium H₃O⁺, d'ions potassium K⁺, d'ions permanganate MnO₄⁻ et d'ions phosphate PO₄³⁻**.**

Selon un autre exemple avantageux de l'invention, la pièce peut être en un alliage de magnésium choisi parmi les alliages de magnésium et d'au moins une terre rare et contenant éventuellement au moins un métal choisi parmi l'aluminium, le zinc, le silicium, le manganèse, le cuivre, le zirconium et leurs mélanges et en particulier parmi les alliages de magnésium contenant de l'aluminium, du néodyme, du gadolinium, du zinc et du zirconium.

En particulier, l'alliage peut contenir ou être constitué de magnésium, d'aluminium, de néodyme, de gadolinium et de zirconium. La pièce peut être en alliage EV31A, par exemple.

En pratique, avant la mise en contact de la pièce ou de la portion à traiter avec la substance anticorrosion, le procédé peut comporter au moins un prétraitement de la pièce ou de cette portion choisi parmi les traitements suivants et leurs combinaisons :
- un dégraissage alcalin;
- un décapage à l'acide nitrique suivi d'un décapage à l'acide fluorhydrique ;
- un décapage au bifluorure d'ammonium ;
- un décapage au bifluorure de potassium ;
- un décapage au bifluorure de sodium ;
- un sablage suivi d'un dégraissage alcalin ;
- un dégraissage à l'aide d'un solvant ;
- un dégraissage aqueux ;
- un décapage des résidus des traitements du magnésium ; et
- une mise en contact simultanément ou successivement avec au moins un composé choisi parmi la soude, l'eau oxygénée, l'acide acétique, l'acide sulfurique, l'acide fluorhydrique, le bifluorure de sodium, le bifluorure d'ammonium, l'acide phosphorique, l'acide tartrique, et l'acide chlorhydrique.

Une telle préparation de surface de la pièce ou de la portion de la pièce permet alors d'augmenter l'efficacité du traitement anticorrosion.

En outre, de tels décapages peuvent être réalisés par un procédé mécanique léger en utilisant par exemple un tampon abrasif avec une solution de décapage précédemment décrite.

La présente invention a aussi pour objet une substance anticorrosion utilisée lors de la mise en contact du procédé précité.

Selon l'invention, une telle substance anticorrosion est remarquable en ce qu'elle présente un pH égal ou supérieur à 3,2 et égal ou inférieur à 4,2 et de préférence égal ou supérieur à 3,4 et égal ou inférieur à 4,0, contient des ions permanganate à une concentration molaire [MnO₄⁻] supérieure ou égale à 0,06 mol/L et inférieure ou égale à 0,31 mol/L et de préférence, supérieure ou égale à 0,08 mol/L et inférieure ou égale à 0,18 mol/L et notamment égale à 0,13 mol/L et des ions dihydrogénophosphate.

La substance anticorrosion de l'invention peut également contenir des ions choisis parmi les ions potassium, ammonium, sodium, calcium et leurs mélanges. Ces ions proviennent de l'utilisation d'un ou plusieurs sels de dihydrogénophosphate. Avantageusement, quel que soit le mode de mise en œuvre du procédé de l'invention, la substance anticorrosion de l'invention peut être, avant mise contact avec la pièce, constituée d'eau, d'ions potassium K⁺, d'ions permanganate MnO₄⁻ et d'ions phosphate PO₄³⁻.

Selon un mode de réalisation préféré, la substance anticorrosion est obtenue en mélangeant une poudre présentant du permanganate de potassium KMnO₄ et du dihydrogénophosphate de potassium KH₂PO₄ à l'état solide avec un gel époxy. Cette substance anticorrosion peut alors présenter une concentration massique en dihydrogénophosphate de potassium égale ou supérieure à 55g/L et égale ou inférieure à 95g/L, de préférence égale ou supérieure à 60g/L et égale ou inférieure à 80g/L, une concentration massique de permanganate de potassium égale ou supérieure à 10g/L et égale ou inférieure à 50g/L, de préférence égale ou supérieure à 15g/L et égale ou inférieure à 30g/L. Avantageusement, la substance anticorrosion peut également présenter un pH égal ou supérieur à 3,2 et égal ou inférieur à 4,2 et de préférence égal ou supérieur à 3,4 et égal ou inférieur à 4,0.

La présente invention concerne également une pièce en alliage de magnésium comportant au niveau au moins d'une surface d'une portion de la pièce, une couche anticorrosion obtenue avec le procédé précité.

Avantageusement, la couche anticorrosion peut contenir de l'oxyde de manganèse et au moins un phosphate, notamment un phosphate de magnésium, et la couche anticorrosion peut présenter une épaisseur inférieure à 5µm.

La couche d'oxyde de manganèse est poreuse et ses pores sont occupés par des molécules de phosphates. D'autres ions de la solution aqueuse anticorrosion peuvent également être présents.

En pratique, la pièce peut être formée dans un alliage de magnésium choisi parmi les alliages de magnésium et d'au moins une terre rare et contenant au moins un métal choisi parmi l'aluminium, le zinc, le silicium, le manganèse, le cuivre, le zirconium et leurs mélanges et en particulier parmi les alliages de magnésium contenant de l'aluminium, du néodyme, du gadolinium du zinc et du zirconium.

En particulier, l'alliage peut contenir ou être constitué de magnésium, d'aluminium, de néodyme, de gadolinium et de zirconium. La pièce peut être en alliage EV31A, par exemple ou comporter une couche ou une portion en alliage EV31A.

Selon un exemple de réalisation de l'invention, la couche anticorrosion peut être électriquement conductive et peut présenter une différence de potentiel standard ΔE par rapport au potentiel standard de l'alliage de ladite pièce supérieure à 1V et notamment supérieure ou égale à 1,1V ; 1,2V, 1,3V ou 1,4V et/ou en ce que ladite couche anticorrosion résiste à la corrosion au moins 20 heures et notamment 24 heures causé par un vieillissement accéléré et/ou la couche anticorrosion peut présenter un grade 0 ou 1 pour l'adhérence à la peinture selon la norme ISO 2409.

### Définitions

Le terme « phosphate » désigne une partie des constituants de l'acide phosphorique, des ions dihydrogénophosphate, des ions hydrogénophosphate, des ions phosphate et de leurs mélanges.

D'autres caractéristiques et avantages de l'invention ressortiront à la lecture de la description qui suit, en référence aux dessins annexés, parmi lesquels :

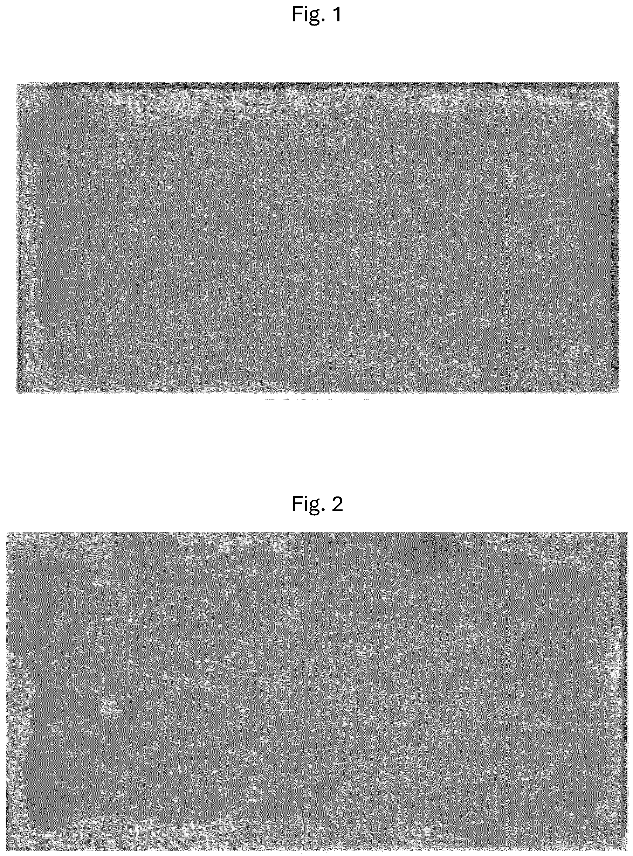

Les figures 1 et 2 représentent deux éprouvettes traitées anticorrosion puis soumises durant 24h au test de corrosion d'un vieillissement accéléré. L'éprouvette de la figure 1 a été traitée localement selon le procédé de l'invention et présente une couche de traitement ayant une épaisseur inférieure à 5µm et par exemple comprise entre 0,5µm et 1µm, tandis que l'éprouvette de la figure 2 a été traitée par une solution de retouche commercialisée sous l'appellation « DOW19 » et présentant des ions Cr6+.

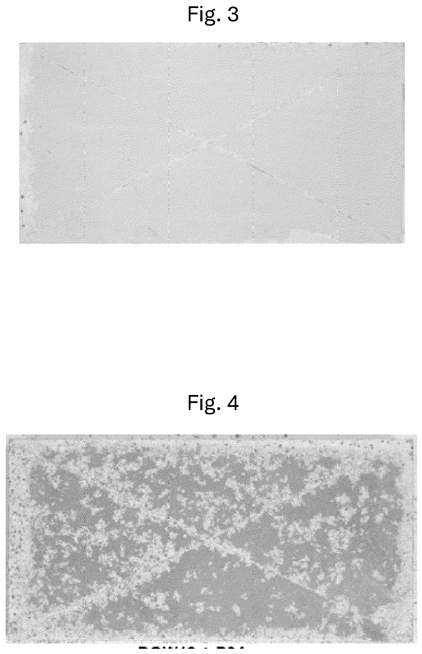

Les figures 3 et 4 représentent quant à elles deux éprouvettes préalablement recouvertes d'un apprêt puis traitées anticorrosion et soumises durant 24h au test de corrosion d'un vieillissement accéléré. L'éprouvette de la figure 3 a été traitée localement selon le procédé de l'invention et présente une couche de traitement ayant une épaisseur inférieure à 5µm et par exemple comprise entre 0,5µm et 1µm, tandis que l'éprouvette de la figure 4 a été traitée par une solution de retouche DOW19 et présentant des ions Cr6+.

### EXEMPLES

### Exemple 1 : mode de mise en œuvre particulier du procédé de l'invention

### Préparation de la substance anticorrosion

En pratique, pour une application industrielle du procédé de traitement par contact sans immersion, une substance anticorrosion peut être préparée dans un contenant.

A titre d'exemple illustratif, on dissout dans quelques centilitres de litres, de gel époxy, une poudre comportant du permanganate de potassium KMnO₄ à l'état solide permettant d'obtenir une concentration molaire en ions permanganate [MnO₄⁻] égale à 0,13 mol/L avec du dihydrogénophosphate de potassium KH₂PO₄ à l'état solide pour obtenir une concentration molaire en ions dihydrogénophosphate [H₂PO₄⁻] comprise entre 0,47 mol/L et 0,63 mol/L, et préférentiellement comprise entre 0,51 mol/L et 0,59 mol/L, voire égale à 75 g/L de manière à obtenir une substance anticorrosion dont le pH est supérieur ou égale à 3,4 et inférieur ou égal à 3,6 et notamment égal à 3,5.

Afin d'obtenir un tel mélange, on peut mélanger manuellement dans un gel époxy la poudre comprenant le permanganate de potassium KMnO₄ et du dihydrogénophosphate de potassium KH₂PO₄ à l'état solide. Un tel gel époxy est en effet inerte chimiquement avec les ions permanganate MnO₄⁻ et dihydrogénophosphate H₂PO₄⁻ pour obtenir les espèces chimique à appliquer au moins localement sur la pièce.

### Prétraitement de la pièce

Une portion de la pièce ou la pièce en entier peut subir un prétraitement choisi parmi le groupe comportant un dégraissage alcalin, un décapage à l'acide nitrique suivi d'un décapage à l'acide fluorhydrique, un décapage au bifluorure d'ammonium, un décapage au bifluorure de potassium, un décapage au bifluorure de sodium, un sablage suivi d'un dégraissage alcalin, un dégraissage à l'aide d'un solvant, un dégraissage aqueux, un décapage des résidus des traitements du magnésium et une mise en contact simultanément ou successivement avec au moins un composé choisi parmi la soude, l'eau oxygénée, l'acide acétique, l'acide sulfurique, l'acide fluorhydrique, le bifluorure de sodium, le bifluorure d'ammonium, l'acide phosphorique, l'acide tartrique, et l'acide chlorhydrique.

Une telle préparation de surface de la pièce ou de la portion de la pièce permet alors d'augmenter l'efficacité du traitement anticorrosion.

En outre, un tel prétraitement peut être réalisé par un procédé mécanique léger en utilisant par exemple un tampon abrasif avec une solution de décapage précédemment décrite.

### Traitement de la pièce

La température de la substance anticorrosion est celle de l'air ambiant. A l'aide d'un applicateur, tel que par exemple un pinceau ou un rouleau, on prélève de la substance anticorrosion présente dans le contenant et on la dépose sur la pièce ou la portion de la pièce à traiter pendant une durée prédéterminée supérieure ou égale à 3 min et inférieure ou égale à 7 min.

Lorsque la durée prédéterminée de traitement est écoulée, on essuie la substance anticorrosion et on rince la pièce à l'eau déionisée. On peut alors souffler ou sécher la pièce ainsi traitée.

### Etude des propriétés de la couche anticorrosion formée

La couche anticorrosion formée est visible car elle présente une couleur brune (beige rosé clair/doré ou mat à brun foncé). L'épaisseur de la couche anticorrosion est inférieure à 5µm.

La couche anticorrosion formée par le procédé de l'invention est électriquement conductrice.

La tenue à la corrosion de la couche anticorrosion obtenue selon le procédé de l'invention à un vieillissement accéléré a été mesurée. La pièce traitée selon le procédé de l'invention résiste 24h avant l'apparition des premières piqûres de corrosion.

La figure 2 montre bien que l'éprouvette traitée par une solution de retouche DOW19 et présentant aux ions Cr6+ et soumise au test de corrosion dit de brouillard salin neutre durant 24 h présente une surface entièrement corrodée. Au contraire, l'éprouvette traitée selon la procédé de l'invention, illustrée à la figure 1, présente une surface non corrodée au bout de 24h du même test.

La tenue à la corrosion de la couche anticorrosion obtenue selon le procédé de l'invention recouverte d'un vernis à un brouillard salin neutre selon la norme ISO 9227 a également été mesurée. La pièce de l'invention recouverte de vernis résiste plus de 250 heures avant l'apparition des premières piqûres de corrosion.

La tenue à la corrosion de la couche anticorrosion obtenue selon le procédé de l'invention, recouverte d'un système de peinture comportant un primaire et une finition ou un vernis, soumise à un vieillissement accéléré a également été mesurée. La pièce de l'invention recouverte de peinture résiste plus de 1000 heures avant l'apparition des premières piqûres de corrosion.

L'adhérence des vernis et peintures a été testée selon la norme ISO 2409. Il s'avère que la couche anticorrosion obtenue selon le procédé de l'invention présente un grade 0 pour ce qui est de l'adhérence à la peinture selon la norme précitée. Après vieillissement humide, et toujours selon la norme précitée, la couche anticorrosion obtenue selon le procédé de l'invention présente un grade 1 pour ce qui est de l'adhérence à la peinture (selon la norme ISO 2409). Le cycle de vieillissement a une durée de 24h qui se décompose de la manière suivante : 6h d'exposition dans un environnement humide : 80%HR, 40°C, puis immersion de 15min dans une solution saline (5%NaCl) et le reste du temps, cycle de séchage à l'air ambiant.

### Tests de vieillissement accéléré en enceinte climatique

Par ailleurs, des cycles de vieillissement comme indiqués dans le paragraphe précédent sur l'alliage EV31A traité anticorrosion révèlent la présence de premières piqûres de corrosion après 2 cycles de 24h pour une pièce traitée par mordançage au chrome alors qu'après le quinzième cycle de 24h aucune piqûre n'est décelée dans le cas d'une pièce comportant une couche anticorrosion obtenue selon le procédé de l'invention et ayant une épaisseur inférieure à 5µm.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Procédé de traitement anticorrosion d'une pièce en alliage de magnésium, ledit procédé comportant une mise en contact au moins localement, avec un organe applicateur, d'une portion de ladite pièce avec une substance anticorrosion pendant une durée prédéterminée,
**caractérisé en ce que** ladite substance anticorrosion contient :
- des ions permanganate MnO₄⁻,
- des ions dihydrogénophosphate H₂PO₄⁻, et
- un gel époxy dont le pH est compris entre 6 et 8,
après mélange, ladite substance anticorrosion comportant une concentration molaire en ions permanganate [MnO₄⁻] supérieure ou égale à 0,06 mol/L (mole par litre) et inférieure ou égale à 0,31 mol/L, et une concentration molaire en ions dihydrogénophosphate [H₂PO₄⁻] supérieure ou égale à 0,47 mol/L (mole par litre) et inférieure ou égale à 0,63 mol/L, et préférentiellement comprise entre 0,51 mol/L et 0,59 mol/L, et **en ce que**, après ladite durée prédéterminée, ledit procédé comporte un rinçage avec de l'eau de ladite portion de ladite pièce.

2. Procédé selon la revendication 1,
**caractérisé en ce que** ladite substance anticorrosion est obtenue en mélangeant ledit gel époxy avec une poudre présentant du permanganate de potassium KMnO₄ et du dihydrogénophosphate de potassium KH₂PO₄ à l'état solide.

3. Procédé selon la revendication 1,
**caractérisé en ce que** ladite concentration molaire en ions permanganate [MnO₄⁻] est supérieure ou égale à 0,08 mol/L et inférieure ou égale à 0,18 mol/L et notamment égale à 0,13 mol/L.

4. Procédé selon l'une quelconque des revendications 1 à 3,
**caractérisé en ce que** ladite durée prédéterminée est supérieure ou égale à 1 min et inférieure ou égale à 10 min et de préférence égale ou supérieure à 3 min et inférieure ou égale à 7 min.

5. Procédé selon l'une quelconque des revendications 1 à 4,
**caractérisé en ce que**, lors de ladite mise en contact au moins localement de ladite portion de ladite pièce avec ladite substance anticorrosion, ladite substance anticorrosion présente une température égale à une température de l'air ambiant.

6. Procédé selon l'une quelconque des revendications 1 à 5,
**caractérisé en ce que** ladite substance anticorrosion présente une viscosité dynamique comprise entre 1 pascal-seconde (Pa.s) et 1000 pascal-seconde (Pa.s).

7. Procédé selon l'une quelconque des revendications 1 à 6,
**caractérisé en ce que** ladite pièce est formée dans un alliage de magnésium choisi parmi les alliages de magnésium et d'au moins une terre rare et contenant au moins un métal choisi parmi l'aluminium, le zinc, le silicium, le manganèse, le cuivre, le zirconium et leurs mélanges.

8. Procédé selon l'une quelconque des revendications 1 à 7,
**caractérisé en ce qu'**avant la mise en contact de ladite pièce avec la substance anticorrosion, ledit procédé comporte au moins un prétraitement de ladite pièce choisi parmi les traitements suivants et leurs combinaisons :
- un dégraissage alcalin;
- un décapage à l'acide nitrique suivi d'un décapage à l'acide fluorhydrique ;
- un décapage au bifluorure d'ammonium ;
- un décapage au bifluorure de potassium ;
- un décapage au bifluorure de sodium ;
- un sablage suivi d'un dégraissage alcalin ;
- un dégraissage à l'aide d'un solvant ;
- un dégraissage aqueux ;
- une mise en contact simultanément ou successivement avec au moins un composé choisi parmi la soude, l'eau oxygénée, l'acide acétique, l'acide sulfurique, l'acide fluorhydrique, le bifluorure de sodium, le bifluorure d'ammonium, l'acide phosphorique, l'acide tartrique, l'acide chlorhydrique.

9. Substance anticorrosion utilisée lors de la mise en contact du procédé selon la revendication 1, **caractérisée en ce que** ladite substance anticorrosion présente un pH égal ou supérieur à 3,2 et égal ou inférieur à 4,2 et de préférence égal ou supérieur à 3,4 et égal ou inférieur à 4,0, contient des ions permanganate en une concentration molaire [MnO₄⁻] supérieure ou égale à 0,06 mol/L et inférieure ou égale à 0,31 mol/L et de préférence, supérieure ou égale à 0,08 mol/L et inférieure ou égale à 0,18 mol/L et notamment égale à 0,13 mol/L et des ions dihydrogénophosphate.

10. Pièce en alliage de magnésium comportant au niveau au moins d'une surface d'une portion de ladite pièce une couche anticorrosion obtenue avec le procédé selon l'une quelconque des revendications 1 à 8.

11. Pièce selon la revendication 10,
**caractérisée en ce que** ladite couche anticorrosion contient de l'oxyde de manganèse et au moins un phosphate, notamment un phosphate de magnésium et **en ce que** ladite couche anticorrosion présente une épaisseur inférieure à 5µm.

12. Pièce selon l'une quelconque des revendications 10 à 11,
**caractérisée en ce que** ladite pièce est en alliage de magnésium choisi parmi les alliages de magnésium et d'au moins une terre rare et contenant éventuellement au moins un métal choisi parmi l'aluminium, le zinc, le silicium, le manganèse, le cuivre, le zirconium et leurs mélanges.

13. Pièce selon l'une quelconque des revendications 10 à 12,
**caractérisée en ce que** ladite couche anticorrosion est électriquement conductive et présente une différence de potentiel standard ΔE par rapport au potentiel standard de l'alliage de ladite pièce supérieure à 1V et notamment supérieure ou égale à 1,1V ; 1,2V, 1,3V ou 1,4V et/ou **en ce que** ladite couche anticorrosion résiste à la corrosion au moins 20 heures et notamment 24 heures causé par un vieillissement accéléré et/ou **en ce que** ladite couche anticorrosion présente un grade 0 ou 1 pour l'adhérence à la peinture selon la norme ISO 2409.
